# EUROPÄISCHE PATENTSCHRIFT

(11) **EP 3 774 423 B1**
(45) Veröffentlichungstag und Bekanntmachung des Hinweises auf die Patenterteilung: **15.01.2025**
(21) Anmeldenummer: 20711140.2
(22) Anmeldetag: 12.03.2020
(51) Int. Cl.: B60K 1/02, B60K 17/28

(54) **VOLL-ELEKTRISCHE ANTRIEBSEINHEIT FÜR EIN FAHRZEUG, INSBESONDERE EINE SELBSTFAHRENDE ARBEITSMASCHINE, SOWIE VORGEHENSWEISE ZU IHREM BETRIEB**
FULLY ELECTRIC DRIVE UNIT FOR A VEHICLE, IN PARTICULAR A SELF-PROPELLING WORK MACHINE, AND PROCEDURE FOR OPERATION THEREOF
UNITÉ D'ENTRAÎNEMENT ENTIÈREMENT ÉLECTRIQUE POUR VÉHICULE, EN PARTICULIER MACHINE DE TRAVAIL AUTOMOTRICE, ET PROCÉDÉ DE FONCTIONNEMENT DE CELLE-CI

(30) Priorität: 12.03.2019 DE 102019106294
(43) Veröffentlichungstag der Anmeldung: 17.02.2021
(73) Patentinhaber: MULAG FAHRZEUGWERK Heinz Wössner GmbH & CO. KG, 77728 Oppenau (DE)
(72) Erfinder: WÖSSNER, Holger, 77704 Oberkirch (DE)
(74) Vertreter: Weickmann & Weickmann PartmbB
(86) Internationale Anmeldenummer: PCT/EP2020/056607
(87) Internationale Veröffentlichungsnummer: WO 2020/182933

(56) Entgegenhaltungen:
- WO-A1-2017/063864
- WO-A2-2018/156676
- DE-A1- 102010 031 156
- DE-A1- 102016 224 092

## Beschreibung

### I. Anwendungsgebiet

Die Erfindung betrifft eine voll-elektrische Antriebseinheit für ein Fahrzeug, insbesondere eine selbstfahrende Arbeitsmaschine, mit benötigter sehr großer Getriebespreizung ihres Fahr-Antriebes.

### II. Technischer Hintergrund

Unter selbstfahrenden Arbeitsmaschinen werden solche verstanden, bei denen ein Arbeitsgerät montierbar und demontierbar auf einem Trägerfahrzeug, insbesondere dessen Chassis, angeordnet ist wie etwa ein Schneepflug, oder bei dem das Arbeitsgerät zusammen mit dem Trägerfahrzeug eine integrale selbstfahrende Arbeitsmaschine bildet wie etwa bei einem selbstfahrenden Mähdrescher.

Bei einer solchen selbstfahrenden Arbeitsmaschine muss der Leistungsbedarf des Arbeitsgerätes nicht mit der Fahrgeschwindigkeit des Trägerfahrzeuges und dem hierfür aufzuwendenden Leistungsbedarf in einem festen Verhältnis zueinander stehen.

Die Arbeitsmaschine kann ein Werkzeug umfassen, was jedoch nicht Bedingung für die Definition als Arbeitsmaschine ist. Jeder Leistungsempfänger auf dem Trägerfahrzeug wie etwa eine Hydraulik-Einheit gilt im Sinne der vorliegenden Erfindung ebenfalls als Arbeitsgerät.

Fahrzeuge mit großer Getriebespreizung sind beispielsweise Traktoren oder Baufahrzeuge:
Ein im landwirtschaftlichen Betrieb eingesetzter Traktor muss für bestimmte Arbeitsvorgänge, beispielsweise bestimmte Bodenbearbeitungen, die Fahrgeschwindigkeit auf 1 km/h oder gar darunter senken können, im Fahrbetrieb auf öffentlichen Straßen sind dagegen Fahrgeschwindigkeiten von 80 km/h oder gar mehr erwünscht.

Gleichzeitig kann gerade bei einer solchen langsamen Kriechfahrt der Leistungsbedarf an den mechanischen Zapfwellen oder den hydraulischen Anschlüssen des Traktors für ein damit verbundenes, am Traktor angebautes Arbeitsgerät besonders hoch sein.

Bei selbstfahrenden Arbeitsmaschinen wird das Problem des oftmals voneinander unabhängigen Leistungsbedarfs von Arbeitsgerät einerseits und Fahrantrieb des Trägerfahrzeuges andererseits bisher dadurch gelöst, dass der einzige vorhandene Energieerzeuger, der Verbrennungsmotor, über eine hydraulische serielle Pumpe-Motor-Kombination (Hydrostat) den Fahrantrieb mit Drehmoment versorgt, und aus dem Hydrostat über einen Nebenabtrieb das Drehmoment, also die Antriebsleistung, für das Arbeitsgerät entnommen wird und somit unabhängig von der Drehzahl/Fahrgeschwindigkeit des Fahrantriebes. Dabei kann der hydrostatische Antriebsstrang parallel zu einem vollständig mechanischen Antriebsstrang vorgesehen sein, sodass der Kraftfluss wahlweise über einen der beiden Antriebsstränge läuft, beispielsweise über den hydrostatischen Antriebsstrang dann, wenn ein mechanisches Getriebe im mechanischen Antriebsstrang geschaltet werden soll.

Aus der internationalen Patentanmeldung WO 2017/063864 A1 ist ein Antriebsstrang für eine selbstfahrende landwirtschaftliche Arbeitsmaschine bekannt, bei dem eine Haupt-Antriebsquelle in Form eines Verbrennungsmotors Leistung in den Antriebsstrang einbringt, mit diesem aber auch kontinuierlich verstellbare Hydraulikmotoren, meist gesteuert an- und auskuppelbar, sowohl Leistung in den Antriebsstrang einbringen als auch aus diesem abnehmen können, wobei die Leistung aus dem Antriebsstrang über verschiedene, zuschaltbare und abschaltbar, Neben-Abtriebe abgenommen werden kann.

Will man eine selbstfahrende Arbeitsmaschine dagegen ausschließlich elektrisch antreiben (voll-elektrischer Antrieb), so könnte man den Verbrennungsmotor durch einen Elektromotor ersetzen, benötigt jedoch nach wie vor das nachgeschaltete hydraulische Getriebe in Form des Hydrostats oder hydraulischen Wandlers.

Bei reinen Transport-Fahrzeugen, insbesondere Zug-Fahrzeugen mit benötigter großer Getriebespreizung des Fahr-Antriebes wird der unabhängige Nebenabtrieb nicht benötigt, und der Hydrostat dient lediglich der Erzielung der großen Drehzahl-Spreizung, gegebenenfalls in Kombination mit einem vor-oder nachgeschalteten mechanischen Getriebe.

Für die Bewältigung einer großen Drehzahl-Spreizung sind weiterhin Planetengetriebe bekannt, die u.a. ein Sonnenrad, ein Hohlrad und einen Planetenträger umfassen.

In diesem Zusammenhang sei darauf hingewiesen, dass ein Planetengetriebe im wörtlichen Sinn nicht unbedingt ein Hohlrad, also ein Rad mit einer Verzahnung an seinem Innenumfang, aufweisen muss, sondern es Bauformen gibt, bei denen statt des Hohlrades, meist axial dazu versetzt, ein weiteres Zahnrad mit - stattdessen oder zusätzlich - Verzahnung am Außenumfang und/oder auf der Stirnseite als Bestandteil des Planetengetriebes vorhanden sein kann.

Für die Zwecke der vorliegenden Anmeldung sei jedoch klargestellt, dass der Begriff "Hohlrad" keine derartige Einschränkung der Planetengetriebe bedeuten soll, dass das sogenannte Hohlrad tatsächlich eine Verzahnung an seinem Innenumfang aufweisen muss.

Im Zweiwellen-Betrieb, also wenn eines dieser drei Elemente nicht drehbar ist oder nicht dreht, kann ein hohes, allein durch die geometrische Auslegung dieser drei Elemente zueinander bedingtes, festes Übersetzungsverhältnis vorliegen.

Im Dreiwellen-Betrieb, also wenn alle dieser drei Elemente drehbar sind, kann ein Planetengetriebe
- als Verteiler-Getriebe eingesetzt werden, indem eines der drei Elemente angetrieben wird und die beiden anderen als Abtriebe benutzt werden
- oder als Summier-Getriebe eingesetzt werden, indem zwei der drei Elemente angetrieben werden und das dritte als einziger Abtrieb benutzt wird, an den die Summe der Antriebsleistungen der beiden angetriebenen Elemente des Planeten-Getriebes abgegeben wird.

Letzteres wird beispielsweise in Hybrid-Fahrzeugen benutzt, um zwei - meist von der Bauart unterschiedliche - Antriebsquellen wie beispielsweise einen Verbrennungsmotor einerseits und einen Elektromotor andererseits so zu koppeln, dass diese einen in ihrem Verhältnis zueinander variablen Antriebs-Anteil leisten können, und den Abtrieb des Planetengetriebes mit der angetriebenen Achse des Fahrzeuges zu verbinden.

In diesem Zusammenhang beschreibt die DE 2016224092 A1 einen Antriebsstrang für ein Kraftfahrzeug, bei dem Verbrennungsmotor und I-Maschine die beiden Antriebsquellen sind und an deren Ausgang das Summen Drehmoment dieser beiden Antriebsquellen ab greifbar ist. Dabei soll mittels einer Regelvorrichtung eine Soll-Drehgeschwindigkeit an dem Ausgang einstellen basierend auf der Drehgeschwindigkeit einer der beiden Antriebsquellen sowie der Soll-Drehmomente der beiden Antriebsquellen.

Die dadurch erreichbare Drehzahl-Spreizung an der angetriebenen Achse ist jedoch begrenzt.

Die WO 2018/156676 A2 zeigt eine Antriebseinheit nach dem Oberbegriff von Anspruch 1.

### III. Darstellung der Erfindung

### a) Technische Aufgabe

Es ist daher die Aufgabe gemäß der vorliegenden Erfindung, eine voll-elektrischen Antriebseinheit, insbesondere ohne hydraulische Komponenten in der Antriebseinheit selbst, für ein Fahrzeug zur Verfügung zu stellen, das eine große , vorzugsweise stufenlose, Drehzahlspreizung, insbesondere von mehr als 1 zu 500, vorzugsweise mehr als 1 zu 600 vorzugsweise mehr als 1 zu 690 für dessen Antriebsräder bietet und im Fall einer selbstfahrenden Arbeitsmaschine eine Leistungsversorgung oder Drehmoment-Versorgung für das Arbeitsgerät bietet, die unabhängig von der Drehzahl oder der Fahrgeschwindigkeit des Fahrantriebes, also der angetriebenen Räder des Trägerfahrzeuges, ist.

### b) Lösung der Aufgabe

Diese Aufgabe wird durch die Merkmale der Ansprüche 1, 11 und 13 gelöst. Vorteilhafte Ausführungsformen ergeben sich aus den Unteransprüchen.

Unter einer voll-elektrischen Antriebseinheit wird eine solche verstanden, bei der die benötigte mechanische Energie ausschließlich von Elektromotoren zur Verfügung gestellt wird, unbeachtlich der Tatsache, ob diese über Batterien, über Brennstoff-Zeilen oder andere Quellen mit Energie versorgt werden.

Insbesondere werden dabei als Elektromotoren E-Maschinen verwendet, die wahlweise als Elektromotor, also als elektrischer Verbraucher, oder elektrischer Generator betrieben werden können.

Hier ist der Nebenabtrieb mit einem der beiden angetriebenen Eingänge des Planetengetriebes, also beispielsweise mit einer der E-Maschinen, mechanisch gekoppelt, vorzugsweise in einem festen Übersetzungsverhältnis, wobei die Kopplung vorzugsweise auch aufhebbar, also deaktivierbar, sein kann.

Durch diese Konstellation ist zwar die Drehzahl am Nebenabtrieb nicht frei wählbar, sondern hängt von der Drehzahl am entsprechenden Eingang des Planetengetriebes, mit der der Nebenabtrieb gekoppelt ist, also der dort angekoppelten E-Maschine, ab. Jedoch kann die Drehzahl des Hauptabtriebes, also des Ausganges des Planetengetriebes, frei gewählt werden, da es von der Relation der Drehzahlen an den beiden Eingängen des Planetengetriebes abhängt.

Wenn also der Nebenabtrieb eine bestimmte Drehzahl der mit ihm in fester Übersetzung gekoppelten in Maschine erfordert, kann dennoch am Ausgang des Planetengetriebes die Drehzahl variiert werden, indem in Relation zur Drehzahl der ersten E-Maschine die Drehzahl der zweiten E-Maschine gesteuert wird. Auch die Drehrichtung am Ausgang des Planetengetriebes kann auf diese Art und Weise gewählt werden.

Deshalb ist die Leistung der leistungsstärkeren E-Maschine um maximal 500 %, vorzugsweise nur um maximal 300 % größer als die der leistungsschwächeren E-Maschine, so dass beide E-Maschinen auch die gleiche Leistung besitzen können. Ist die Leistung unterschiedlich, ist die leistungsstärkere E-Maschine vorzugsweise mit dem Eingang des Planetengetriebes gekoppelt, an dem der Nebenabtrieb sitzt.

Das Leistungsverzweigung-Getriebe sollte vorzugsweise so ausgelegt sein, dass die maximale Drehzahl des schnelleren aus Planetenträger einerseits und Nebenabtrieb andererseits maximal 500 %, besser nur um maximal 300 % höher ist als die des langsameren der beiden.

Vorzugsweise ist die eine E-Maschine mit dem Sonnenrad, die andere E-Maschine mit dem Hohlrad gekoppelt, also wirkverbunden, so dass am Planetenträger auch sehr niedrige Drehzahlen einschließlich Stillstand des Planetenträgers, auch bei drehenden Sonnenrad und Hohlrad, auf einfache Art und Weise verwirklicht werden können.

Auf diese Art und Weise kann bei einer solchen Antriebseinheit vollständig auf hydraulische Komponenten verzichtet werden, insbesondere innerhalb des Fahr-Antriebes.

Vorzugsweise ist eine Steuerung, insbesondere eine elektronische Steuerung, vorhanden, die nach den vom Bediener eingegebenen Ziel-Vorgaben für die Antriebseinheit oder nach Anforderungssignalen, die von angeschlossenen Komponenten geliefert werden, die Antriebseinheit steuert, insbesondere der beiden Antriebsquellen, insbesondere die beiden E-Maschinen, unabhängig voneinander ansteuert, wobei also Drehrichtung, Drehzahl und Drehmoment jeder der beiden E-Maschinen frei einstellbar sind,

Je nach Anwendungszweck kann am Planetenträger ferner ein Verteilergetriebe, insbesondere ein Differential, angekoppelt sein, um die an diesen Ausgang des Planetengetriebes ausgegebene Drehzahl und Leistung zielgerichtet zu verteilen.

Ebenso können weiterhin Nebenabtriebe, vorzugsweise jedoch jeweils in einem festen Drehzahlverhältnis, insbesondere drehfest, mit einer der vorhandenen mindestens zwei Antriebsquellen, insbesondere E-Maschinen wirkverbunden sein.

Für eine kompakte Gestaltung der Antriebseinheit können die beiden Antriebsquellen, insbesondere E-Maschinen, achsparallel, insbesondere koaxial hintereinander oder gar ineinander liegend, angeordnet sein, wobei dann das Planetengetriebe vorzugsweise stirnseitig und zentrisch auf der Stirnseite einer der beiden E-Maschinen angeordnet ist.

Bei der Antriebseinheit handelt es sich um eine vollelektrische Antriebseinheit in dem Sinne, dass die Antriebsquellen für deren Verteilergetriebe ausschließlich E-Maschinen sind und insbesondere die Steuerung für die Antriebseinheit eine elektrische, insbesondere elektronische, Steuerung ist. Die Energie für die E-Maschinen und die Steuerung kann durch eine Batterie, einen Stromerzeuger wie eine Brennstoffzelle oder über andere Arten der elektrischen Energieversorgung zur Verfügung gestellt werden.

Zusätzlich kann in einem Abtriebsstrang, insbesondere nur einem Abtrieb, insbesondere dem Haupt-Abtrieb, eine Kupplung und/oder eine Bremse vorgesehen sein:
Mittels der Bremse kann der entsprechende Abtrieb, der durch den davon angetriebenen Verbraucher ohnehin gebremst wird, zusätzlich abgebremst werden.

Als Bremse kann eine konventionelle Bremse wie etwa eine Scheibenbremse verwendet werden, wobei die abgenommene Bremsenergie nicht genutzt wird sondern als Abwärme verloren geht, oder auch ein Verbraucher, insbesondere ein Geräte-Teil des von der Antriebseinheit angetriebenen Arbeitsgerätes, verwendet werden.

Ob sich dabei die Bremse oder die Kupplung in diesem Abtriebsstrang, insbesondere dem Haupt-Abtrieb, bezüglich der Antriebseinheit, insbesondere dem Planetengetriebe, weiter stromabwärts befindet, hängt vom Verwendungszweck ab.

Kupplung und Bremse können koaxial hintereinander angeordnet sein.

Ebenso ist offen gelassen, ob die Bremse und/oder die Kupplung direkt auf dem entsprechenden Abtrieb sitzen, oder in einem dazu parallelen Neben-Strang, der mit dem Abtriebsstrang gekoppelt ist, insbesondere mechanisch gekoppelt ist, vorzugsweise in einem festen Drehzahlverhältnis,

Hinsichtlich eines voll-elektrisch angetriebenen Fahrzeuges, insbesondere einer selbstfahrenden Arbeitsmaschine, wird die gestellte Aufgabe dadurch gelöst, dass die in diesem Fahrzeug vorhandene Antriebseinheit - die bei einer selbstfahrenden Arbeitsmaschine auch das Arbeitsgerät dieser selbstfahrenden Arbeitsmaschine mit antreibt - die erfindungsgemäße voll-elektrische Antriebseinheit ist.

Vorzugsweise ist dabei der Planetenträger mit den Antriebsrädern des Fahrzeuges, insbesondere über ein zwischengeschaltetes Differenzial, wirkverbunden, während - bei einer selbstfahrenden Arbeitsmaschine - der Nebenabtrieb mit dem Arbeitsgerät der selbstfahrenden Arbeitsmaschine wirkverbunden ist.

Dadurch kann die Fahrgeschwindigkeit und Fahrtrichtung des Trägerfahrzeuges im Wesentlichen unabhängig von dem momentanen Leistungsbedarf des Arbeitsgerätes gesteuert werden.

Dabei kann das Leistungsverzweigungs-Getriebe zusammen mit dem Achskörper oder den Antriebszapfen für die angetriebenen Räder eine fest miteinander verbundene, gemeinsam handhabbare Baugruppe bilden, durch deren Einbau in ein Chassis sehr schnell ein entsprechendes Fahrzeug, insbesondere eine selbstfahrende Arbeitsmaschine, erstellt werden kann.

Hinsichtlich des Steuerungsverfahrens für die erfindungsgemäße selbstfahrende Arbeitsmaschine, insbesondere deren voll-elektrische Antriebseinheit, welche sowohl das Trägerfahrzeug als auch das Arbeitsgerät antreibt, wird die bestehende Aufgabe abhängig von der primären momentanen Verwendung - Betreiben des Arbeitsgerätes oder schnelles Fahren des Trägerfahrzeuges - unterschiedlich gelöst:
Unter primärer Verwendung wird verstanden, dass der jeweils andere Verwendungszweck durchaus parallel vorliegen und auch durchgeführt werden kann, jedoch der größte Anteil der insgesamt momentan genutzten Leistung für den primären Verwendungszweck verwendet wird.

Wenn primär das Arbeitsgerät betrieben, also von der voll-elektrischen Antriebseinheit angetrieben, werden soll, dagegen die dabei gewünschte Fahrgeschwindigkeit des Trägerfahrzeuges relativ gering oder gar null ist, also wenig Leistung benötigt - wie beispielsweise bei einer im Einsatz befindlichen Schneefräse oder einem Mähdrescher - werden
- einerseits Sonnenrad und Hohlrad, die von jeweils einem der beiden E-Maschinen angetrieben werden, gegenläufig angetrieben, so dass diese Differenz-Drehzahl die Drehzahl des Planetenträgers und damit die Drehzahl der Antriebsräder des Trägerfahrzeuges bestimmt, die somit sehr klein sein kann und auch Null sein kann,
- andererseits die mit dem Nebenabtrieb gekoppelte E-Maschine mit einer solchen Drehzahl betrieben, dass der Nebenabtrieb dem davon angetriebenen Arbeitsgerät die gewünschte Drehzahl und/oder Leistung zur Verfügung stellt. Die Drehzahl der anderen E-Maschine wird in Relation zur erstgenannten E-Maschine so gewählt, dass die gewünschte Differenz-Drehzahl im Planetengetriebe erzielt wird.

Steht dagegen primär das Fahren, insbesondere das schnelle Fahren des Trägerfahrzeuges im Vordergrund, wofür in der Regel bei hoher Fahrgeschwindigkeit eine hohe Leistung, dagegen bei niedriger Fahrgeschwindigkeit hohes Drehmoment benötigt wird, während das Arbeitsgerät deaktiviert ist, also nicht angetrieben werden muss, werden
- einerseits Sonnenrad und Hohlrad, in der gleichen Drehrichtung angetrieben, so dass die höhere dieser beiden Drehzahlen die Drehzahl des Planetenträgers und damit die Drehzahl der Antriebsräder des Trägerfahrzeuges bestimmt, die somit sehr hoch sein kann,
- andererseits das Arbeitsgerät von dem Nebenabtrieb entkoppelt ist.

Wenn beispielsweise Sonnenrad und Hohlrad mit der gleichen Drehzahl und in der gleichen Drehrichtung angetrieben werden, ist dies auch die Drehzahl und Drehrichtung des Planetenträgers, da dann die einzelnen Planeten-Ritzel bezüglich ihrer eigenen Drehachse stillstehen und keine Relativbewegung zu Sonnenrad und Hohlrad vollziehen.

Dreht sich beispielsweise das Hohlrad etwas schneller als das Sonnenrad, aber in der gleichen Drehrichtung, so liegt die Drehzahl des Planetenträgers zwischen der von Sonnenrad und Hohlrad, besitzt aber die gleiche Drehrichtung wie diese beiden Räder des Planetengetriebes.

Soll das Fahrzeug aus dem Stand anfahren, können beide E-Maschinen vorzugsweise gleichzeitig, jedoch in der gleichen Drehrichtung, angetrieben werden.

Für ein besonders langsames Anfahren, beispielsweise wegen eines hierfür erforderlichen sehr hohen Drehmomentes, werden vorzugsweise beide E-Maschine gegenläufig in Drehung versetzt, vorzugsweise mit der gleichen Drehzahl, wodurch sich der Planetenträger nur mit einer Differenzgeschwindigkeit in Bewegung setzt, insbesondere anfangs stillsteht.

Mittels leichter Erhöhung der Drehzahl der einen E-Maschine und oder leichten Absenkung der Drehzahl der anderen E-Maschine stellt sich - ausgehend von einem stillstehenden Planetenträger-dann eine geringe Drehzahl verbunden mit einem hohen Drehmoment am Planetenträger ein. Dadurch lassen sich hohe Antriebsmomente beim Anfahren oder langsamen Fahrgeschwindigkeiten der mit dem Planetenträger gekoppelten Antriebsräder des Fahrzeuges realisieren.

Die Vorgehensweise für das Anfahren und auch das schnelle Fahren des Trägerfahrzeuges ist auch anwendbar für ein Fahrzeug, welches kein Arbeitsgerät besitzt, aber beispielsweise wegen eines hohen Gewichts oder aus anderen Gründen ein hohes Drehmoment beim Anfahren benötigt und dessen Geschwindigkeit sehr genau gesteuert werden soll.

Einen ersten Sonderfall stellt dabei der Übergang von einer niedrigen zu einer hohen Fahrgeschwindigkeit des Fahrzeuges dar:
Zunächst wird ausgehend von gegenläufiger Drehrichtung der beiden E-Maschinen deren Differenzdrehzahl erhöht, was auch von einer Differenzdrehzahl = Null aus erfolgen kann und dann einem Anfahren des Fahrzeuges entspricht.

Das Erhöhen der Differenzdrehzahl erfolgt dabei so, dass die Drehzahl einer der beiden E-Maschinen bis auf Null abgesenkt und in die entgegengesetzte Drehrichtung umgeschaltet wird und in dieser anderen Drehrichtung die Drehzahl dieser E-Maschine erhöht wird, wobei diese nach dem umschalten vorliegende Drehrichtung derjenigen Drehrichtung entspricht, die die gewünschte Fahrtrichtung des Fahrzeuges bewirkt

Vorzugsweise ist beim Absenken der Drehzahl der einen E-Maschine der Zuwachs an Leistung der anderen E-Maschine höher, so dass das Fahrzeug dennoch schneller wird. Auch während des Wechsels der Drehrichtung der einen E-Maschine die Drehzahl der anderen E-Maschine weiter erhöht, so dass es weder zu einer unterbrochenen Beschleunigung des Fahrzeuges, insbesondere Trägerfahrzeuges und insbesondere nicht zu einer zeitweisen Verlangsamung des Fahrzeuges kommt.

Einen zweiten Sonderfall stellt die Steuerung für einen Reversier-Betrieb des Fahrzeuges dar, also das abwechselnde Vorwärtsfahren und Rückwärtsfahren des Fahrzeuges:
Bei ungleichen Drehrichtungen von Sonnenrad und Hohlrad, also insbesondere der beiden damit gekoppelten E-Maschinen, hängt die Drehrichtung des Planetenträgers und damit der Antriebsräder des Fahrzeuges davon ab, welche der beiden Drehzahlen von Sonnenrad und Planetenrad die Höhere ist.

Somit kann ein abwechselndes Vorwärtsfahren und Rückwärtsfahren des Fahrzeuges bewirkt werden, indem - ohne die Drehrichtung von Sonnenrad oder Hohlrad sowie der damit gekoppelten E-Maschinen zu ändern - deren Drehzahlen so verändert werden, dass abwechselnd das eine oder das andere Rad die höhere Drehzahl besitzt, wobei dieser Wechsel jeweils eine Fahrtrichtung-Umkehr des Fahrzeuges bewirkt.

Ein Anhalten einer der E-Maschinen wird dadurch vermieden und somit auch die im untersten Drehzahlbereich einer E-Maschine relativ geringe Leistung.

Bei der beschriebene Antriebseinheit kann zumindest eine der beiden E-Maschinen - insbesondere unabhängig vom Betriebszustand der Antriebseinheit - als Generator zum Rekuperieren von elektrischer Energie, beispielsweise , beispielsweise als elektrische Bremse, eingesetzt werden, beispielsweise wenn von den Antriebsrädern des Fahrzeuges bei z.B. Bergabfahrt Energie in das Planetengetriebe, etwa den Planetenträger, eingebracht wird oder von einem Nebenabtrieb Energie von einer Arbeitsmaschine in das Planetengetriebe eingebracht wird.

### c) Ausführungsbeispiele

Ausführungsformen gemäß der Erfindung sind im Folgenden beispielhaft näher beschrieben. Es zeigen:
- **Figuren 1a, b:**: zwei Bauformen der Antriebseinheit,
- **Figur 1c:**: eine axiale Ansicht des Planetengetriebes aus Figur 1a,
- **Figur 2:**: ein selbstfahrendes Arbeitsgerät mit der Antriebseinheit aus Figur 1a - c,
- **Figur 3:**: eine Antriebsachsen-Baugruppe mit der Antriebseinheit aus Figur 1a - c,
- **Figuren 4a, b**:: ergänzte Varianten der Bauform gemäß Figur 1a.

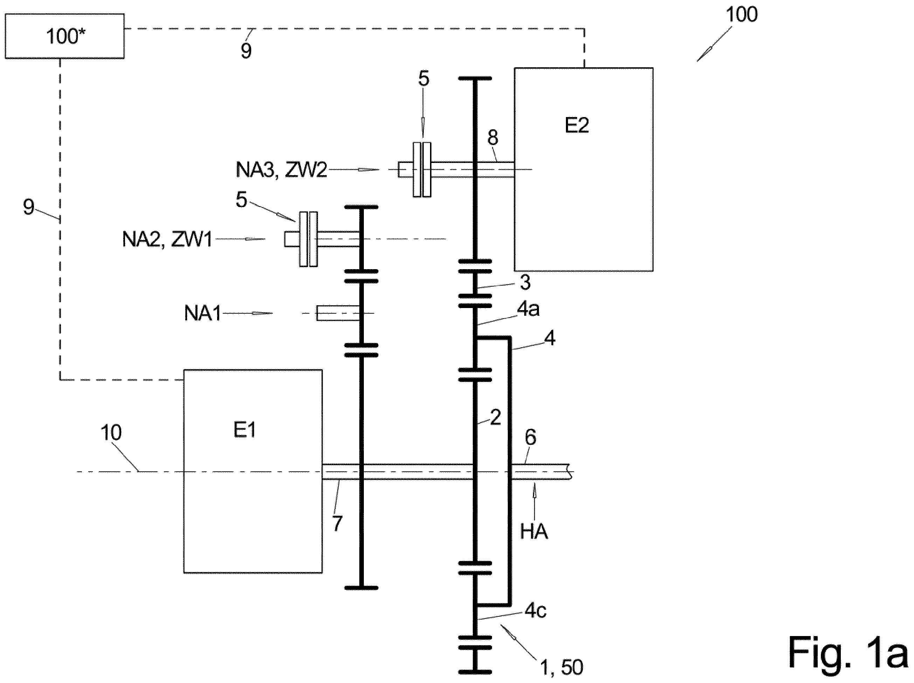

**Figur 1a** zeigt in der Seitenansicht eine 1. Bauform der erfindungsgemäßen Antriebseinheit 100 bestehend aus einem Leistungsverzweigung-Getriebes 50 - in Form eines klassischen Planetengetriebes 1 und mindestens einem ersten Nebenabtrieb NA1 - und zwei achsparallel zueinander angeordneten E-Maschinen E1, E2 als Antriebsquellen, die im Normalbetrieb einerseits das Sonnenrad 2 mittels einer Welle 7 und andererseits das Hohlrad 3 des Planetengetriebes 1 mittels einer Welle 8 antreiben, während der Planetenträger 4 des Planetengetriebes 1 als Hauptabtrieb HA in Form einer drehfest daran befestigten Welle 6 dient.

Der Nebenabtrieb NA1 ist mit der drehfest mit dem Sonnenrad 2 verbundenen Welle 7 und/oder der mit dieser verbundenen ersten E-Maschine E1 in einem festen Drehzahlverhältnis gekoppelt.

Zusätzlich ist in diesem Fall an der Welle 7 - die drehfest mit dem Rotor der E-Maschine E1 gekoppelt ist - direkt oder indirekt ein weiterer Nebenabtrieb NA2 vorhanden, der ebenfalls in einem festen Drehzahlverhältnis mit der E-Maschine E1 gekoppelt ist, der in diesem Fall beispielsweise eine Zapfwelle ZW1 sein kann.

Ebenso kann ein weiterer Nebenabtrieb NA3 in einem festen Drehzahlverhältnis verbundenen Welle 8 und/oder der mit dieser verbundenen ersten E-Maschine E2 gekoppelt sein.

Jeder der Nebenabtriebe kann über eine Kupplung 5 von dem Planetengetriebe 1, trennbar sein, wie in diesem Fall nur an den Nebenabtrieben NA2 und NA3 dargestellt.

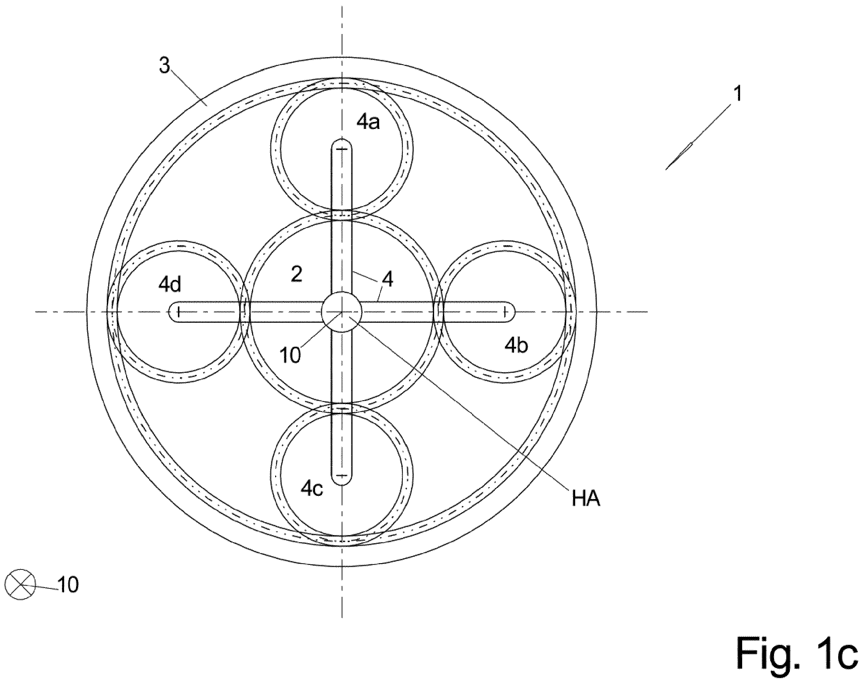

Insbesondere die Aufsicht auf das Planetengetriebe 1 in axialer Richtung 10- der Rotationsachse des Sonnenrades 2 - gemäß **Figur 1c** macht deutlich, dass es sich hierbei um ein klassisches Planetengetriebe handelt, bei dem das innen verzahnte Hohlrad 3 konzentrisch zum außen verzahnten Sonnenrad 2 angeordnet ist und beide mit über die in diesem Fall vier Planetenritzel 4a bis d in Eingriff stehen, die drehbar um ihre Rotationsachsen auf einem Planetenträger 4 befestigt sind, der mit der Welle 6 wirkverbunden ist, insbesondere drehfest verbunden ist.

Beide E-Maschinen E1, E2 sind signaltechnisch über Signalleitungen 9 mit der Steuerung 100*verbunden.

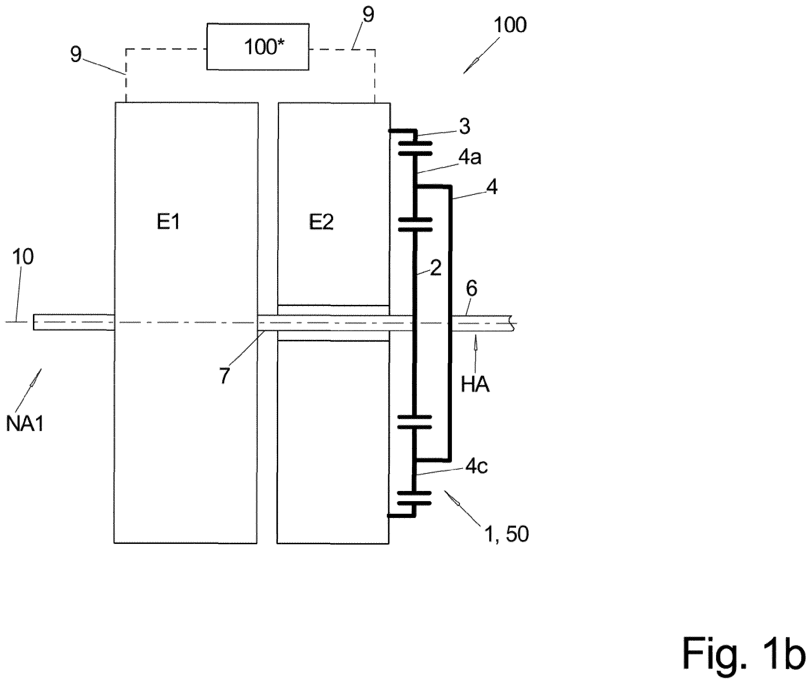

**Figur 1b** zeigt in der gleichen Ansicht wie Figur 1a eine 2. Bauform der erfindungsgemäßen Antriebseinheit 100, die sich von der 1. Bauform im Wesentlichen dadurch unterscheidet, dass es sich dabei um eine koaxiale Anordnung der beiden E-Maschinen E1, E2 handelt, bei der sich die Welle 7, die das Sonnenrad 2 mit der E-Maschinen E1 verbindet, durch das hohle Zentrum der E-Maschine E2 hindurch erstreckt, die sich in axialer Richtung 10 zwischen der E-Maschine E1 und dem Planetengetriebe 50 befindet. Die E-Maschine E2 ist über Verbindungselemente 8 mit dem Hohlrad 3 drehfest verbunden.

Um einen einfachen kompakten Aufbau zu erzielen, ist bei dieser 2. Bauform die beide E-Maschinen E1 und 2 auf der einen Stirnseite des Planetengetriebes 50 angeordnet, vorzugsweise auf der dem Hauptabtrieb HA des Planetengetriebes 50 gegenüberliegenden Seite des Planetengetriebes.

Bei der 1. Bauform gemäß **Figur 1a** sind dagegen die beiden E-Maschinen E1, E2 auf einander gegenüberliegenden Stirnseiten des Planetengetriebes 1 achsparallel zueinander angeordnet, so dass die Welle 7, die das Planetengetriebe 1, insbesondere dessen Sonnenrad 2, mit der E-Maschinen E1 verbindet und die Welle 8, die die E-Maschine E2 mit dem Planetengetriebe 50 koppelt, parallel zueinander verlaufen. Die Welle 8 ist dabei mit einem Zahnrad drehfest verbunden, dessen Außenverzahnung mit einer auf dem Hohlrad 3 zusätzlich vorhandenen Außenverzahnung kämmt.

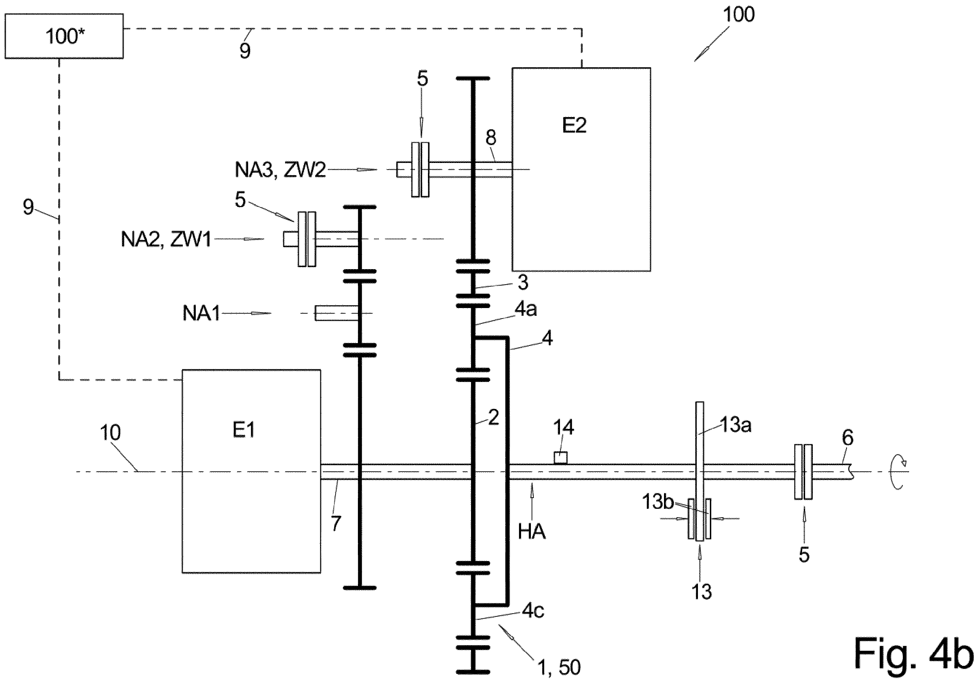

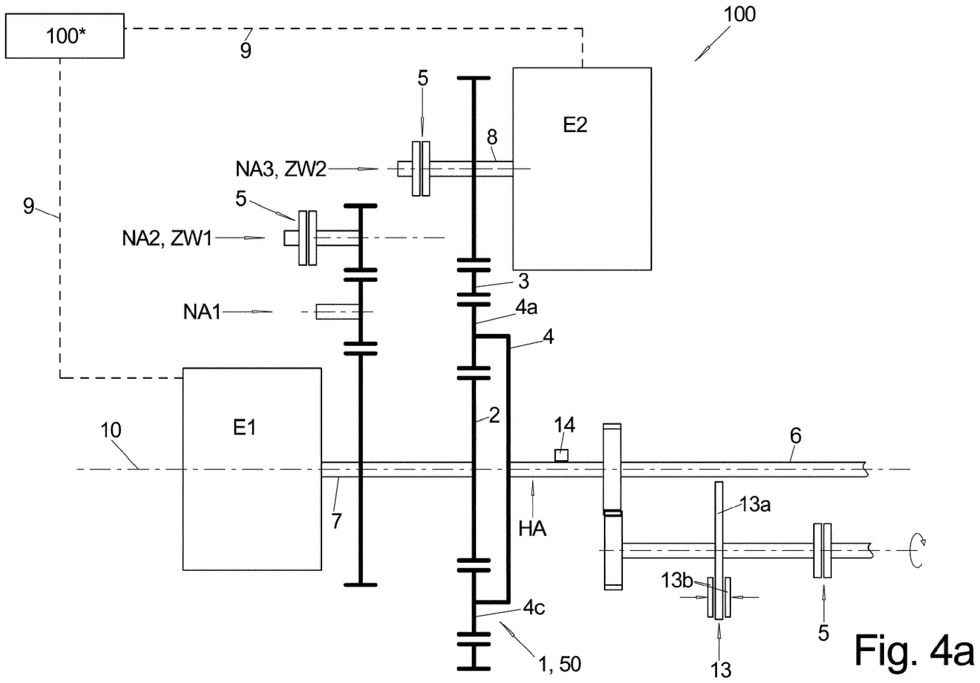

Die Figuren **4a****,** **b** zeigen eine ergänzte Ausstattung am Haupt-Abtrieb 6 der Bauform gemäß **Figur 1a****,** wobei diese ergänzte Ausstattung am Haupt-Abtrieb 6 auch an jeder anderen Bauform der erfindungsgemäßen Antriebseinheit, insbesondere des erfindungsgemäßen Planetengetriebes, vorhanden sein kann:
Gemäß **Figur 4b** ist im Abtriebsstrang stromabwärts des Haupt-Abtriebes HA in dessen Welle 6 einerseits eine Bremse 13 angeordnet, also drehfest mit dem dieser Welle 6 verbunden, und stromabwärts davon eine Kupplung 5 in diesem Abtriebsstrang angeordnet.

Durch die Bremse 13 - in diesem Fall ausgebildet als konventionelle Scheibenbremse mit einer drehfest mit dem Haupt-Abtrieb HA, also der Abtriebswelle 6, gekoppelten Bremsscheibe 13a, gegen die in axialer Richtung beidseits Bremsbacken 13b angepresst werden können - kann der Haupt-abtrieb HA zusätzlich gebremst werden.

Mittels der Kupplung 5 können von dem Haupt-Abtrieb HA angetriebene Verbraucher vollständig von diesem abgekoppelt werden.

Die Kupplung 5 kann stattdessen und/oder zusätzlich auch stromaufwärts des der Bremse 13 angeordnet werden, um auch die Bremse vom Haupt-Abtrieb HA des Verteilergetriebes abkoppeln zu können.

Bei der Bauform gemäß **Figur 4b** gilt, insbesondere funktional, das gleiche wie zu **Figur 4a** erläutert, jedoch sind Bremse 13 und Kupplung 5 hier in einem separaten Nebenstrang des Haupt-Abtriebsstanges 6 angeordnet, der über eine Zahnradverbindung mit dem Haupt-Abtrieb HA in einem festen Drehzahlverhältnis gekoppelt ist.

In beiden Fällen kann am Haupt-Abtrieb HA ein Drehmoment-Sensor 14 vorhanden sein, der das Drehmoment und damit die Leistung, die an diesem Abtrieb abgenommen wird, messen kann.

Damit kann - selbst wenn nur an diesem Haupt-Abtrieb HA oder nur einem der Neben-Abtriebe ein solcher Drehmoment-Sensor 14 vorhanden ist - die Leistungs-Verteilung auf alle Abtriebe innerhalb der Antriebs-Einheit von der Steuerung 100* ermittelt werden.

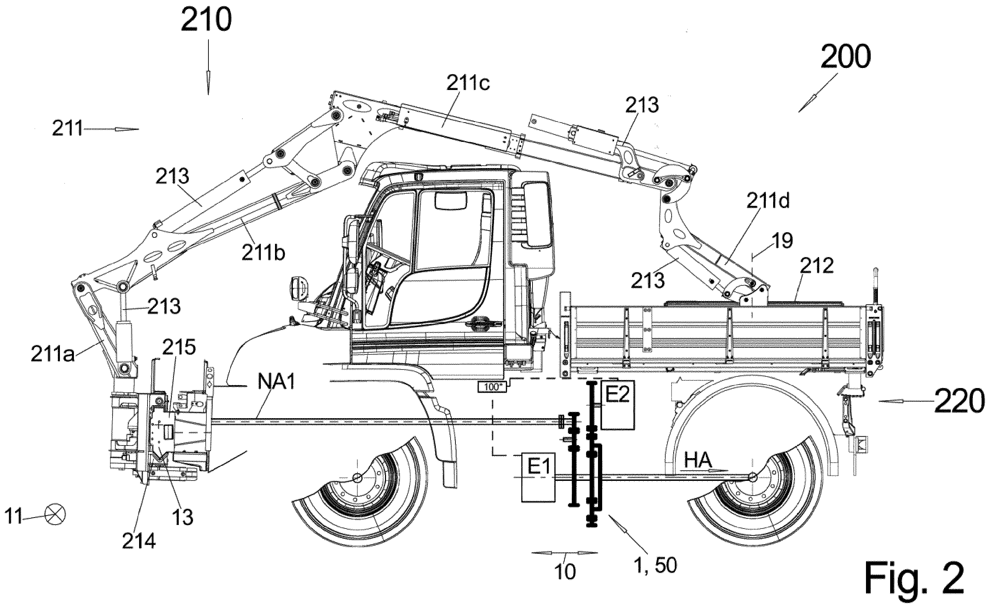

**Figur 2** zeigt die Antriebseinheit 100 der **Figur 1a** eingebaut in einer selbstfahrenden Arbeitsmaschine 200:
Dabei ist der Hauptabtrieb HA in Form der Welle 6 mit der angetriebenen Hinterachse oder den beiden angetriebenen Achsen des Trägerfahrzeuges 220 über jeweils ein Verteilergetriebe VG wirkverbunden, während der Nebenabtrieb NA1 mit dem auf dem Trägerfahrzeug 220 montierten Arbeitsgerät 210 gekoppelt ist, insbesondere lösbar gekoppelt ist mittels einer hier nicht dargestellten Kupplung.

Bei dem Arbeitsgerät 210 handelt es sich in diesem Fall um ein Ausleger-Arbeitsgerät in Form eines Ausleger-Mähgerätes. Der Auslegerarm 211, der aus mehreren gelenkig miteinanderverbundenen Armteilen 211a bis 211d besteht, ist fahrzeugseitig an einem Führungsschuh 214 befestigt, welcher in der horizontalen Querrichtung 11 gesteuert verfahrbar ist entlang einer vor der Vorderfront des Trägerfahrzeuges 220 befestigten Führungsschiene 215.

Am fahrzeug-abgewandten, freien Ende des Auslegerarm ist 211 ist der Arbeitskopf 212 - hier ein Mähkopf 212 zum Mähen des Bewuchses neben dem Rand der Fahrbahn von Straßen - befestigt, der sich in dieser Darstellung in seiner Ablageposition auf der Ladefläche des Trägerfahrzeuges 220 hinter dessen Fahrerkabine, also in seiner Transportstellung, befindet.

Die Armteile 211a bis 211d können in ihrer gegenseitigen Winkellage gesteuert verstellt werden durch dazwischen angeordnete längenveränderbare, insbesondere teleskopierbare, Stellelemente, in diesem Fall hydraulische oder elektrisch betätigbare, Arbeitszylinder-Einheiten 213, die jeweils mit einem ihrer Enten an einem der Armteile befestigt sind und mit ihrem anderen Ende direkt oder indirekt mit dem nächsten Armteil, jeweils abseits der Schwenkgelenke dazwischen, so dass durch verändern der Länge der Stellelemente der Zwischenwinkel zwischen den Armteilen verändert werden kann.

Durch Verschwenken des fahrzeugseitigen Endes des Auslegerarmes 211 um eine vertikale Schwenkachse gegenüber dem Führungsschuh 214 kann der Arbeitsgruppe 212 in die gewünschte Lage, im Arbeitseinsatz meist seitlich neben oder seitlich vor dem Trägerfahrzeug 220 gebracht werden.

Durch die erfindungsgemäße Antriebseinheit 100 kann die Fahrgeschwindigkeit des Trägerfahrzeuges 220 unabhängig von der über den Nebenabtrieb NA1 an das Arbeitsgerät 210 abgegebenen Leistung gesteuert werden durch Steuerung der Drehzahl und damit Leistung der beiden E-Maschinen E1, E2.

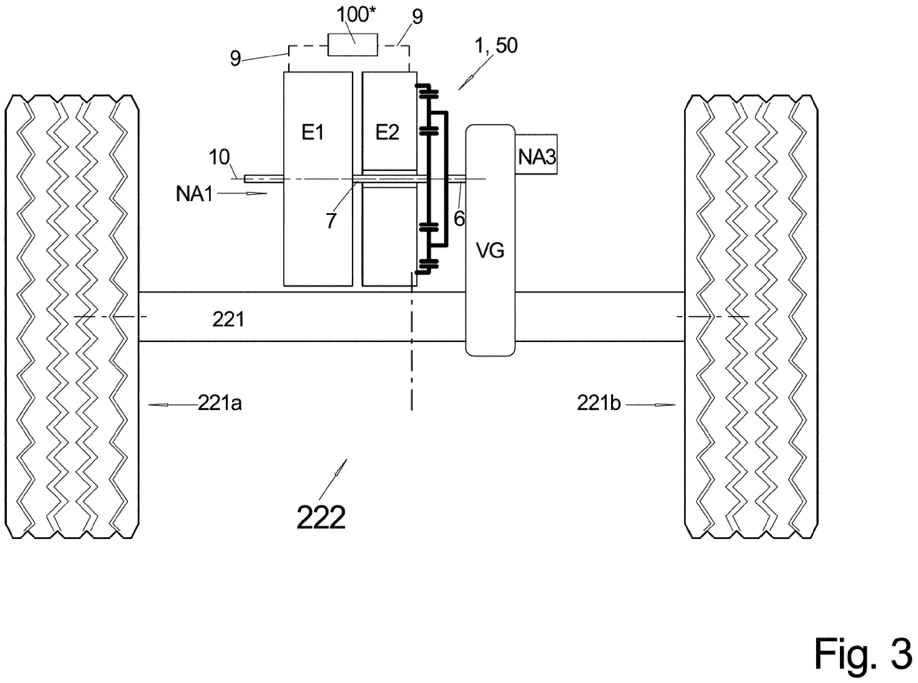

Zum vereinfachten Aufbau einer selbstfahrenden Arbeitsmaschine 200 zeigt **Figur 3****,** wie die erfindungsgemäße Antriebseinheit 100 mit einem mit der Welle 6 des Hauptabtriebes HA gekoppelten Verteilergetriebe VG, welches andererseits mit der angetriebenen Achse 221 wirkverbunden ist, eine fertige, gemeinsam handhabbare Antriebs-Baugruppe 222 bilden kann, die bei der Montage des Trägerfahrzeuges 220 lediglich in dessen Chassis eingesetzt und fixiert werden muss.

### BEZUGSZEICHENLISTE

- 1: Planetengetriebe
- 2: Sonnenrad
- 3: Hohlrad
- 4: Planetenträger
- 4a-d: Planeten-Ritzel
- 5: Kupplung
- 6: Welle
- 7: Welle
- 8: Verbindungselement
- 9: Signalleitung
- 10: axiale Richtung, Rotationsachse
- 11: 1. Querrichtung
- 12: 2. Querrichtung
- 13: Bremse
- 13a: Bremsscheibe
- 13b: Bremsbacke
- 14: Leistungs-Sensor, Drehmoment-Sensor

- 50: Leistungsverzweigungs-Getriebe

- 100: Antriebseinheit
- 100*: Steuerung

- 200: selbstfahrende Arbeitsmaschine
- 210: Arbeitsgerät, Ausleger-Mähgerät
- 211: Auslegerarm
- 211a - d: Armteile
- 212: Arbeitskopf, Mähkopf
- 213: Arbeitszylinder-Einheit
- 214: Führungsschuh
- 215: Frontschiene

- 220: Trägerfahrzeug
- 221: Antriebsachse
- 221a, b: angetriebenes Rad
- 222: Antriebsachsen-Baugruppe

- E1, E2: E- Maschine
- HA: Haupt-Abtrieb
- NA1, /2, /3: Nebenabtrieb
- VG: Verteilergetriebe
- ZW1, ZW2: Zapfwelle

## Patentansprüche

1. Voll-elektrische **Antriebseinheit** (100) für ein Fahrzeug, insbesondere eine selbstfahrende Arbeitsmaschine (200) mit einem Trägerfahrzeug (220) und einem integrierten oder demontierbar darauf angeordneten Arbeitsgerät (210), wobei die Antriebseinheit (100) umfasst
- ein Leistungsverzweigungs-Getriebe (50) mit
- einem Planetengetriebe (1) mit den drehbaren Elementen Sonnenrad (2), Hohlrad (3) sowie Planetenträger (4),
- wobei eines dieser drei drehbaren Elemente als Haupt-Abtrieb des Planetengetriebes (1) genutzt werden kann,
- zwei Antriebsquellen, von denen jede mit einem der beiden anderen der drei genannten drehbaren Elemente (2, 3, 4) des Planetengetriebes (1) wirkverbunden ist und dieses antreiben kann,
- einer Steuerung (100*), die die beiden Antriebsquellen unabhängig voneinander zentral steuern kann,
wobei
- zwei E-Maschinen (E1, E2) als Antriebsquellen,
- wobei die E-Maschinen (E1, E2) unabhängig voneinander steuerbar sind,
- mindestens einen Nebenabtrieb (NA1), der mit einer der beiden E-Maschinen (E1 oder E2) wirkverbunden ist, insbesondere in einem festen Übersetzungsverhältnis mit dieser E-Maschine (E1 oder E2) wirkverbunden ist,
**dadurch gekennzeichnet, dass**
- die maximale Leistung der leistungsstärkeren E-Maschine (z.B. E1) größer und um maximal 500 % größer ist als diejenige der leistungsschwächeren E-Maschine (z.B. E2).

2. Antriebseinheit nach Anspruch 1,
**dadurch gekennzeichnet, dass**
- die maximale Leistung der leistungsstärkeren E-Maschine (z.B. E1) um maximal 300 % größer ist als diejenige der leistungsschwächeren E-Maschine (z.B. E2).

3. Antriebseinheit nach einem der vorhergehenden Ansprüche,
**dadurch gekennzeichnet, dass**
- die maximale Drehzahl des schnelleren aus Planetenträger einerseits und Nebenabtrieb andererseits maximal 500 %, besser nur um maximal 300 % höher ist als die des langsameren der beiden,
- insbesondere die maximale Drehzahl des Planetenträgers einerseits und des Nebenabtriebs andererseits die gleiche ist.

4. Antriebseinheit nach einem der vorhergehenden Ansprüche,
**dadurch gekennzeichnet, dass**
- der Planetenträger (4) mit den Antriebsrädern (221a, b) eines Fahrzeuges, insbesondere eines Trägerfahrzeuges (220) wirkverbindbar ist,
und/oder
- der wenigstens eine Nebenabtrieb (NA1) mit dem Arbeitsgerät (210) wirkverbindbar ist.

5. Antriebseinheit nach einem der vorhergehenden Ansprüche,
**dadurch gekennzeichnet, dass**
- die eine E-Maschine (E1, E2) mit dem Sonnenrad (2) und die andere E-Maschine (E2, E1) mit dem Hohlrad (3) wirkverbunden ist,
und/oder
- die beiden E-Maschinen (E1, E2) in der Drehrichtung umschaltbar sind.

6. Antriebseinheit nach einem der vorhergehenden Ansprüche,
**dadurch gekennzeichnet, dass**
- der Nebenabtrieb (NA1) eine Zapfwelle (ZW1) ist,
und/oder
- der Nebenabtrieb (NA1) über eine Kupplung (5) abkuppelbar ist.

7. Antriebseinheit nach einem der vorhergehenden Ansprüche,
**dadurch gekennzeichnet, dass**
- die beiden E-Maschinen (E1, E2) achsparallel, insbesondere konzentrisch zueinander, angeordnet sind,
- insbesondere mit dem Planetengetriebe (1) an einer der beiden Stirnseiten der E-Maschinen-Gruppe.

8. Antriebseinheit nach einem der vorhergehenden Ansprüche,
**dadurch gekennzeichnet, dass**
- bei koaxial zueinander angeordneten E-Maschinen (E1, E2) die vom Planetengetriebe (1) weiter entfernte E-Maschine (E1 oder E2), insbesondere axial, mit dem Nebenabtrieb (NA1) wirkverbunden ist.

9. Antriebseinheit nach einem der vorhergehenden Ansprüche,
**dadurch gekennzeichnet, dass**
- an mindestens einem der Abtriebe (HA, NA1, NA2, NA3), vorzugsweise nur an einem Abtrieb, vorzugsweise nur am Haupt-Abtrieb (HA,), ein Drehmoment-Detektor (14) angeordnet ist,
und/oder
- der Planetenträger (4) mit einem Verteilergetriebe (VG), insbesondere einen Differenzial, wirkverbunden ist.

10. Antriebseinheit nach einem der vorhergehenden Ansprüche,
**dadurch gekennzeichnet, dass**
- mit dem Haupt-Abtrieb (HA), koaxial oder parallel angeordnet,
- eine Kupplung (5),
und/oder
- eine Bremse (13) wirkverbunden ist,
- insbesondere als Bremse (13) das Arbeitsgerät (210) oder eine seiner im Betrieb Energie verbrauchenden Teil-Geräte verwendet wird.

11. Voll-elektrisch angetriebenes **Fahrzeug,** insbesondere selbstfahrende **Arbeitsmaschine** (200),
**dadurch gekennzeichnet, dass**
die Antriebseinheit des Fahrzeugs, insbesondere der selbstfahrenden Arbeitsmaschine (200), eine voll-elektrische Antriebseinheit (100) nach einem der Ansprüche 1 bis 10 ist.

12. Fahrzeug nach Anspruch 11,
**dadurch gekennzeichnet, dass**
- der Planetenträger (4) mit den Antriebsrädern (222a, b) eines Fahrzeuges, insbesondere eines Trägerfahrzeuges (220) wirkverbunden ist,
- der wenigstens eine Nebenabtrieb (NA1) insbesondere mit dem Arbeitsgerät (210) wirkverbunden ist,
und/oder
- die angetriebene Achse (221) zusammen mit der voll-elektrischen Antriebseinheit (100) eine integrierte, gemeinsam handhabbare, Antriebsachsen-Baugruppe (222) ist.

13. **Verfahren** zum Steuern eines voll-elektrisch angetriebenen Fahrzeugs, insbesondere einer selbstfahrenden Arbeitsmaschine (200) nach Anspruch 11 oder 12 mit einem Trägerfahrzeug (220) und einem darauf angeordneten Arbeitsgerät (210) sowie einer Antriebseinheit (100), die beide antreibt,
**dadurch gekennzeichnet, dass**
A) zum primären Betreiben des Arbeitsgerätes (210) bei langsamer Fahrt oder gar Stillstand des Trägerfahrzeuges (220)
- Sonnenrad (2) und Hohlrad (3) gegenläufig von je einer der beiden E-Maschinen (E1, E2) angetrieben werden, so dass die Differenz-Drehzahl die Drehzahl des Planetenträgers (4) und damit der Antriebsräder (222a, b) bestimmt,
- die beiden E-Maschinen (E1, E2), insbesondere die mit dem Nebenabtrieb (NA1) gekoppelte E-Maschine (E1), so gesteuert wird, dass das mit dem Nebenabtrieb (NA1) gekoppelte Arbeitsgerät (210) die momentan benötigte Leistung und/oder Drehzahl erhält,
und/oder
B) zum primären schnellen Fahren des Trägerfahrzeuges (220)
- Sonnenrad (2) und Hohlrad (3) in die gleiche Drehrichtung laufend von je einer der beiden E-Maschinen (E1, E2) angetrieben werden, so dass die Summe der beiden Drehzahlen die Drehzahl des Planetenträgers (4) und damit der Antriebsräder (221a, b) bestimmt.

14. Verfahren nach Anspruch 13,
**dadurch gekennzeichnet, dass**
beim Anfahren des Fahrzeuges, insbesondere Trägerfahrzeuges (220) und nicht angetriebenem Arbeitsgerät (210)
- beide E-Maschinen (E1, E2) gleichzeitig also einem zeitlichen Abstand von weniger als 2 Sekunden, besser weniger als 1 Sekunde, in Drehung versetzt werden,
- jedoch von Beginn an gleichlaufend.

15. Verfahren nach Anspruch 13 oder 14,
**dadurch gekennzeichnet, dass**
beim Übergang von langsamer zu schneller Fahrt des Trägerfahrzeuges (220), insbesondere bei, zumindest anfangs, angetriebenem Arbeitsgerät (210)
- ausgehend von gegenläufiger Drehrichtung der beiden E-Maschinen (E1, E2) deren Differenzdrehzahl erhöht wird,
- dabei die Drehzahl einer der beiden E-Maschinen (E1) bis auf Null abgesenkt, in die entgegengesetzte Drehrichtung umgeschaltet und in dieser anderen Drehrichtung angetrieben wird,
- insbesondere während des Null-Durchgang der E-Maschine (E1) die Drehzahl oder das Drehmoment der anderen E-Maschine (E2) weiter erhöht wird, vorzugsweise so, dass die Drehzahl des Planetenträgers (4) während des Null-Durchganges nicht absinkt, vorzugsweise weiter steigt, insbesondere kontinuierlich steigt.

16. Verfahren nach einem der Ansprüche 13 bis 15,
**dadurch gekennzeichnet, dass**
für einen Reversierbetrieb des Fahrzeuges, insbesondere Trägerfahrzeuges (200), bei entgegengesetzt beizubehaltenden Drehrichtungen von Sonnenrad (2) und Hohlrad (3) sowie der damit gekoppelten E-Maschinen (E1, E2) deren Drehzahlen so verändert werden, dass abwechselnd das eine oder das andere davon die höhere Drehzahl besitzt, wobei dieser Wechsel jeweils eine Fahrtrichtungs-Umkehr des Planetenträgers (4) und damit des Fahrzeuges (200) bewirkt.

17. Verfahren nach einem der Ansprüche 13 bis 16,
**dadurch gekennzeichnet, dass**
- wenigstens eine der beiden E-Maschinen (E1, E2) von dem Leistungsverzweigungs-Getriebe (50) angetrieben als Generator eingesetzt wird und eine damit verbundene Batterie auflädt,
und/oder
- über wenigstens einen der Nebenabtriebe (NA1, NA2, NA3) Leistung, insbesondere von einem daran angeschlossenen Arbeitsgerät, in das Leistungsverzweigungs-Getriebe (50) eingebracht werden kann.

## Claims

1. Fully electric **drive unit** (100) for a vehicle, in particular a self-driving work machine (200) comprising a carrier vehicle (220) and an implement (210) that is integrated or is arranged thereon such that it can be dismantled, the drive unit (100) comprising
- a power split transmission (50) having
- a planetary transmission (1) having the rotatable elements of sun gear (2), ring gear (3) and planet carrier (4),
- it being possible for one of these three rotatable elements to be used as the main output of the planetary transmission (1),
- two drive sources, each of which is operatively connected to and can drive one of the two other of the three mentioned rotatable elements (2, 3, 4) of the planetary transmission (1),
- a controller (100*), which can centrally control the two drive sources independently of one another,
- two E-machines (E1, E2) as drive sources,
- the E-machines (E1, E2) being controllable independently of one another,
- at least one secondary output (NA1) which is operatively connected to one of the two E-machines (E1 or E2), in particular is operatively connected to said E-machine (E1 or E2) in a fixed transmission ratio,
**characterised in that**
- the maximum power of the more powerful E-machine (e.g. E1) is greater and at most 500% greater than that of the less powerful E-machine (e.g. E2).

2. Drive unit according to claim 1,
**characterised in that**
- the maximum power of the more powerful E-machine (e.g. E1) is at most 300% greater than that of the less powerful E-machine (e.g. E2).

3. Drive unit according to either of the preceding claims,
**characterised in that**
- the maximum rotational speed of the faster of the planet carrier on the one hand and the secondary output on the other hand is at most 500%, preferably only at most 300% higher than that of the slower of the two,
- in particular the maximum rotational speed of the planet carrier on the one hand and the secondary output on the other hand is the same.

4. Drive unit according to any of the preceding claims,
**characterised in that**
- the planet carrier (4) can be operatively connected to the drive wheels (221a, b) of a vehicle, in particular a carrier vehicle (220),
and/or
- the at least one secondary output (NA1) can be operatively connected to the implement (210).

5. Drive unit according to any of the preceding claims,
**characterised in that**
- one E-machine (E1, E2) is operatively connected to the sun gear (2) and the other E-machine (E2, E1) is operatively connected to the ring gear (3),
and/or
- the direction of rotation of the two E-machines (E1, E2) can be switched.

6. Drive unit according to any of the preceding claims,
**characterised in that**
- the secondary output (NA1) is a power take-off shaft (ZW1),
and/or
- the secondary output (NA1) can be decoupled via a coupling (5).

7. Drive unit according to any of the preceding claims,
**characterised in that**
- the two E-machines (E1, E2) are arranged so as to be axially parallel, in particular concentric with respect to one another,
- in particular with the planetary transmission (1) on one of the two end faces of the E-machine group.

8. Drive unit according to any of the preceding claims,
**characterised in that**
- in the case of E-machines (E1, E2) that are arranged coaxially with respect to one another, the E-machine (E1 or E2) arranged further from the planetary transmission (1) is operatively connected, in particular axially, to the secondary output (NA1).

9. Drive unit according to any of the preceding claims,
**characterised in that**
- a torque detector (14) is arranged on at least one of the outputs (HA, NA1, NA2, NA3), preferably only on one output, preferably only on the main output (HA), and/or
- the planet carrier (4) is operatively connected to a power split transmission (VG), in particular a differential.

10. Drive unit according to any of the preceding claims,
**characterised in that**
- a coupling (5),
and/or
- a brake (13)
- is operatively connected to the main output (HA), arranged coaxially or in parallel,
- in particular the implement (210) or one of its partial tools that consumes energy is used as the brake (13).

11. Fully electrically driven **vehicle,** in particular self-driving **work machine** (200),
**characterised in that**
the drive unit of the vehicle, in particular of the self-driving work machine (200), is a fully electric drive unit (100) according to any of claims 1 to 10.

12. Vehicle according to claim 11,
**characterised in that**
- the planet carrier (4) is operatively connected to the drive wheels (222a, b) of a vehicle, in particular of a carrier vehicle (220),
- the at least one secondary output (NA1) is in particular operatively connected to the implement (210),
and/or
- the driven axle (221) together with the fully electric drive unit (100) is an integrated drive axle assembly (222) that can be handled together.

13. **Method** for controlling a fully electrically driven vehicle, in particular a self-driving work machine (200) according to either claim 11 or claim 12, comprising a carrier vehicle (220) and an implement (210) arranged thereon, as well as a drive unit (100) which drives both,
**characterised in that**
A) for primary operation of the implement (210) during slow travel or even when the carrier vehicle (220) is stationary,
- the sun gear (2) and ring gear (3) are driven in opposing directions by one of the two E-machines (E1, E2) each, such that the differential speed determines the speed of the planet carrier (4) and thus of the drive wheels (222a, b),
- the two E-machines (E1, E2), in particular the E-machine (E1) coupled to the secondary output (NA1), is controlled such that the implement (210) coupled to the secondary output (NA1) obtains the currently required power and/or speed,
and/or
B) for primary rapid travel of the carrier vehicle (220),
- the sun gear (2) and ring gear (3) are driven so as to run in the same direction of rotation, by one of the two E-machines (E1, E2) each, such that the sum of the two speeds determines the speed of the planet carrier (4) and thus of the drive wheels (221a, b).

14. Method according to claim 13,
**characterised in that**
when starting up the vehicle, in particular carrier vehicle (220) and non-driven implement (210),
- both E-machines (E1, E2) are set into rotation simultaneously, i.e. with a time spacing of less than 2 seconds, preferably less than 1 second,
- but in the same direction from the start.

15. Method according to either claim 13 or claim 14,
**characterised in that**
when transitioning from slow to fast travel of the carrier vehicle (220), in particular in the case of an at least initially driven implement (210),
- proceeding from opposing directions of rotation of the two E-machines (E1, E2), the differential speed of which is increased,
- in the process the speed of one of the two E-machines (E1) is reduced to zero, switched to the opposite direction of rotation, and driven in this other direction of rotation,
- in particular during the zero-crossing of the E-machine (E1) the speed or the torque of the other E-machine (E2) is further increased, preferably such that the speed of the planet carrier (4) does not drop during the zero-crossing, but preferably increases further, in particular increases continuously.

16. Method according to any of claims 13 to 15,
**characterised in that**
for reverse operation of the vehicle, in particular carrier vehicle (200), in the case of opposite directions of rotation, to be maintained, of the sun gear (2) and ring gear (3) and the E-machines (E1, E2) coupled thereto, the speeds of which are changed such that alternately one or the other thereof has the higher speed, this change in each case bringing about a travel direction reversal of the planet carrier (4) and thus of the vehicle (200).

17. Method according to any of claims 13 to 16,
**characterised in that**
- at least one of the two E-machines (E1, E2) is used as a generator, driven by the power split transmission (50), and charges a battery connected thereto,
and/or
- power can be introduced via at least one of the secondary drives (NA1, NA2, NA3), in particular from an implement connected thereto, into the power split transmission (50).

## Revendications

1. **Une unité d'entraînement** entièrement électrique (100) pour un véhicule, en particulier une machine de travail automotrice (200) avec un véhicule porteur (220) et un'outil de travail (210) intégré ou disposé de manière démontable sur celui-ci, l'unité d'entraînement (100) comprenant
- une boîte de vitesses à division de puissance (50) avec
- un engrenage planétaire (1) avec les éléments rotatifs que sont la roue solaire (2), la couronne (3) ainsi que le porte-satellites (4),
- dans lequel un de ces trois éléments rotatifs peut être utilisé comme sortie principale de l'engrenage planétaire (1),
- deux sources d'entraînement, dont chacune est reliée fonctionnellement à l'un des deux autres des trois éléments rotatifs (2, 3, 4) mentionnés de l'engrenage planétaire (1) et peut entraîner celui-ci,
- une commande (100*) qui peut commander de manière centrale les deux sources d'entraînement indépendamment l'une de l'autre,
dans lequel
- deux machines électriques (E1, E2) comme sources d'entraînement,
- dans lequel les machines électriques (E1, E2) peuvent être commandées indépendamment l'une de l'autre,
- au moins une prise de force (NA1) qui est reliée fonctionellement à l'une des deux machines électriques (E1 ou E2), en particulier qui est reliée fonctionellement à cette machine électrique (E1 ou E2) selon un rapport de transmission fixe,
**caractérisé en ce que**
- la puissance maximale de la machine électrique plus puissante (par ex. E1) est supérieure et au maximum de 500 % supérieure à celle de la machine électrique moins puissante (par ex. E2).

2. L'unité d'entraînement selon la revendication 1,
**caractérisé en ce que**
- la puissance maximale de la machine électrique plus puissante (par ex. E1) est supérieure de 300 % au maximum à celle de la machine électrique moins puissante (par ex. E2).

3. L'unité d'entraînement selon l'une des revendications précédentes,
**caractérisé en ce que**
- la vitesse de rotation maximale du plus rapide du porte-satellites d'une part et de la prise de force d'autre part est supérieure de 500 % au maximum, ou mieux de 300 % seulement au maximum, à celle du plus lent des deux,
- en particulier, la vitesse de rotation maximale du porte-satellites d'une part et de la prise de force d'autre part est la même.

4. L'unité d'entraînement selon l'une des revendications précédentes,
**caractérisé en ce que**
- le porte-satellites (4) peut être relié fonctionnellement aux roues motrices (221a, b) d'un véhicule, notamment d'un véhicule porteur (220),
et/ou
- ladite au moins une prise de force (NA1) peut être reliée fonctionnellement à l'outil de travail (210).

5. L'unité d'entraînement selon l'une des revendications précédentes,
**caractérisé en ce que**
- Ladite une machine électrique (E1, E2) est reliée fonctionellement à la roue solaire (2) et l'autre machine électrique (E2, E1) est reliée fonctionellement à la couronne (3),
et/ou
- les deux machines électriques (E1, E2) sont réversibles dans le sens de rotation.

6. L'unité d'entraînement selon l'une des revendications précédentes,
**caractérisé en ce que**
- la prise de force (NA1) est une prise de force (ZW1),
et/ou
- la prise de force (NA1) peut être désaccouplée par un embrayage (5).

7. L'unité d'entraînement selon l'une des revendications précédentes,
**caractérisé en ce que**
- les deux machines électriques (E1, E2) sont disposées parallèlement à l'axe, en particulier de manière concentrique l'une par rapport à l'autre,
- en particulier avec l'engrenage planétaire (1) sur l'un des deux côtés frontaux du groupe de machines électriques.

8. L'unité d'entraînement selon l'une des revendications précédentes,
**caractérisé en ce que**
- dans le cas de machines électriques (E1, E2) disposées coaxialement l'une par rapport à l'autre, la machine électrique (E1 ou E2) plus éloignée de l'engrenage planétaire (1) est reliée fonctionnellement, en particulier axialement, à la prise de force (NA1).

9. L'unité d'entraînement selon l'une des revendications précédentes,
**caractérisé en ce que**
- un détecteur de couple (14) est disposé sur au moins l'une des sorties (HA, NA1, NA2, NA3), de préférence uniquement sur une sortie, de préférence uniquement sur la sortie principale (HA),
et/ou
- le porte-satellites (4) est relié fonctionellement à une boîte de transfert (VG), en particulier un différentiel.

10. L'unité d'entraînement selon l'une des revendications précédentes,
**caractérisé en ce que**
- avec la sortie principale (HA), disposée coaxialement ou parallèlement,
- un embrayage (5),
et/ou
- un frein (13) est relié fonctionellement,
- en particulier, l'outil de travail (210) ou l'une de ses parties consommant de l'énergie en fonctionnement est utilisé comme frein (13).

11. **Un véhicule** à entraînement entièrement électrique, en particulier une **machine de travail automotrice** (200),
**caractérisé en ce que**
l'unité d'entraînement du véhicule, notamment de la machine de travail automotrice (200), est une unité d'entraînement entièrement électrique (100) selon l'une des revendications 1 à 10.

12. Le véhicule selon la revendication 11,
**caractérisé en ce que**
- le porte-satellites (4) est relié fonctionnellement aux roues motrices (222a, b) d'un véhicule, notamment d'un véhicule porteur (220),
- ladite au moins une prise de force (NA1) est notamment reliée fonctionellement à l'outil de travail (210),
et/ou
- l'essieu moteur (221) constitue, avec l'unité d'entraînement entièrement électrique (100), un ensemble d'essieu moteur intégré (222) pouvant être manipulé conjointement.

13. **Un procédé** de commande d'un véhicule à entraînement entièrement électrique, en particulier d'une machine de travail automotrice (200) selon la revendication 11 ou 12, comprenant un véhicule porteur (220) et un outil de travail (210) disposé sur celui-ci, ainsi qu'une unité d'entraînement (100) qui entraîne les deux,
**caractérisé en ce que**
A) pour l'entraînement primaire de l'outil de travail (210) en cas de déplacement lent ou même d'arrêt du véhicule porteur (220)
- la roue solaire (2) et la couronne (3) sont entraînées en sens inverse chacune par l'une des deux machines électriques (E1, E2), de sorte que la différence de vitesse de rotation détermine la vitesse de rotation du porte-satellites (4) et donc des roues motrices (222a, b),
- les deux machines électriques (E1, E2), en particulier la machine électrique (E1) couplée à la prise de force (NA1), sont commandées de manière à ce que l'outil de travail (210) couplé à la prise de force (NA1) reçoive la puissance et/ou la vitesse de rotation momentanément nécessaire,
et/ou
B) pour la conduite rapide primaire du véhicule porteur (220)
- la roue solaire (2) et la couronne (3) sont entraînés en continu dans le même sens de rotation, chacun par l'une des deux machines électriques (E1, E2), de sorte que la somme des deux vitesses de rotation détermine la vitesse de rotation du porte-satellites (4) et donc des roues motrices (221a, b).

14. Le procédé selon la revendication 13,
**caractérisé en ce que,**
lors du démarrage du véhicule, notamment du véhicule porteur (220) et de l'outil de travail non entraîné (210)
- les deux machines électriques (E1, E2) sont donc mises en rotation simultanément avec un intervalle de temps inférieur à 2 secondes, de préférence inférieur à 1 seconde,
- mais en tournant simultanément dès le début.

15. Le procédé selon la revendication 13 ou 14,
**caractérisé en ce que**,
lors du passage d'un déplacement lent à un déplacement rapide du véhicule porteur (220), en particulier lorsque l'outil de travail (210) est entraîné, au moins au début,
- en partant du sens de rotation opposé des deux machines électriques (E1, E2), dont la vitesse de rotation différentielle est augmentée,
- la vitesse de rotation de l'une des deux machines électriques (E1) est alors abaissée jusqu'à zéro, commutée dans le sens de rotation opposé et entraînée dans cet autre sens de rotation,
- en particulier pendant le passage par zéro de la machine électrique (E1), on continue d'augmenter la vitesse de rotation ou le couple de l'autre machine électrique (E2), de préférence de telle sorte que la vitesse de rotation du porte-satellites (4) ne diminue pas pendant le passage par zéro, de préférence continue d'augmenter, en particulier augmente continuellement.

16. Le procédé selon l'une des revendications 13 à 15,
**caractérisé en ce que,**
pour un fonctionnement réversible du véhicule, en particulier du véhicule porteur (200), lorsque les sens de rotation de la roue solaire (2) et de la couronne (3) ainsi que des machines électriques (E1, E2) qui leur sont couplées doivent être maintenus opposés, leurs vitesses de rotation sont modifiées de telle sorte que l'un ou l'autre d'entre eux possède alternativement la vitesse de rotation la plus élevée, ce changement provoquant à chaque fois une inversion du sens de marche du porte-satellites (4) et donc du véhicule (200).

17. Le procédé selon l'une des revendications 13 à 16,
**caractérisé en ce que**
- au moins l'une des deux machines électriques (E1, E2), entraînée par la boîte de dérivation de puissance (50), est utilisée comme générateur et recharge une batterie qui lui est associée,
et/ou
- de la puissance, notamment d'un outil de travail qui y est raccordé, peut être introduite dans la boîte de dérivation de puissance (50) par l'intermédiaire d'au moins l'une des prises de force (NA1, NA2, NA3).
